# EUROPEAN PATENT SPECIFICATION

(11) **EP 4 649 005 B1**
(45) Date of publication and mention of the grant of the patent: **25.11.2026**
(21) Application number: 24716902.2
(22) Date of filing: 12.01.2024
(51) Int. Cl.: B64C 1/14, E05C 1/06

(54) **A DOOR LOCK MECHANISM**
TÜRVERRIEGELUNGSMECHANISMUS
MÉCANISME DE VERROUILLAGE DE PORTE

(30) Priority: 13.01.2023 TR 202300433
(43) Date of publication of application: 19.11.2025
(73) Proprietor: Tusas- Turk Havacilik Ve Uzay Sanayii Anonim Sirketi, 06980 Ankara (TR)
(72) Inventor: BAL, Mustafa, 06980 Kahramankazan/Ankara (TR)
(74) Representative: Berkkam, Ayfer
(86) International application number: PCT/TR2024/050020
(87) International publication number: WO 2024/151241

(56) References cited:
- GB-A- 557 797
- US-A- 2 497 624
- US-A1- 2015 020 455

## Description

This invention relates to a lock mechanism suitable for use on a door of an air vehicle.

Door lock mechanisms have been developed to lock and unlock a door, such as an entrance door, an emergency exit door, a service door or a cargo door of an air vehicle. In order to enhance control and security of opening-closing operations of air vehicle doors, there is a need for a lightweight and effective lock system and door handle design suitable for aviation structures.

US2497624, which is included in the known-state of the art, discloses a lock mechanism comprising a body for an air vehicle; at least one door on the body; a locked position in which the door is stationary on the body; a free position in which the door is located movably on the body; a first handle on the door which allows the door to move from the locked position to the free position or from the free position to the locked position; at least one slot on the body; a shaft triggered by the first handle and moving in a direction in which the shaft extends on the door, wherein the shaft is inserted removably into the slot, thus enabling the door to move from the free position to the locked position or from the locked position to the free position. In the said document, a curved link with a slot is pivotally connected to each handle. The slots interact with a pin on the shaft/bolt, thereby enabling independent handle movement tor unlatching the door.

US 2015/020455 A1, which is included in the known-state of the art, discloses a vehicle cargo lid with a lock/latch assembly of similar type. While the shaft is also provided with a plate, this plate is contacted by a fixed tab on each handle when it is rotated.

GB 557 797 A, which is included in the known-state of the art, discloses an aircraft hatch with a lock/latch assembly with two shafts.

CN109488131, which is included in the known-state of the art, discloses a door lock system used in civil air vehicles. According to said invention, a crank is attached to a hand shank of the door. A connecting rod is fixed on the crank, and two crank joints are connected to the door on a side of the crank close to the door.

Thanks to a door lock mechanism according to the present invention, door handles are enabled to operate independently in a controlled manner.

Another object of the present invention is to provide a lightweight door lock system for air vehicles.

Another object of the present invention is to lock a door in a practical, effective, easy-to-use and ergonomic way.

The door lock mechanism realized to achieve the object of the invention, which is defined in the first claim and other claims dependent thereon, comprises a body on an air and/or a space vehicle; at least one door located movably on the body and allowing access to or into the body; a locked position in which the door is locked on the body so as not to move; a free position (S) in which the door is provided on the body such that the door can be opened; a first handle on the door, which allows the door to move from the locked position (K) to the free position (S) or from the free position (S) to the locked position (K) when triggered by a user; at least one slot in the form of a groove on the body; a shaft triggered by the first handle, moving along a direction in which the shaft is provided on the door, and entering into the slot in a removable manner, thus enabling the door to move from the free position to the locked position or from the locked position to the free position.

The door lock mechanism according to the invention comprises a first rod which transmits a movement of the first handle when triggered by the user, to the shaft; a second handle located on the door with the same function as the first handle; a second rod which transmits a movement of the second handle to the shaft; at least one protrusion located on each of the first rod and the second rod and extending outwards; and at least one plate located on the shaft. Thanks to the distance between the protrusions and the plate when the door is in the locked position, if the first handle is triggered by the user, the first rod moves towards the plate by means of the protrusion thereon without triggering the second rod, and contact with the plate, thereby triggering the shaft from the locked position to the free position. The same operational arrangement applies for the second handle and the second rod.

In an embodiment of the invention, the door lock mechanism comprises at least one rod arm which is rotatably connected to the door so as to be in connection with each of the first handle and the second handle, and which allows a movement applied by the first handle or second handle to be transmitted to the first rod or second rod; a first connecting element located between the rod arm and the door and allowing the rod arm to rotate on an axis the rod arm is connected to the door; at least a second connecting element that allows the first handle and/or second handle to rotate around itself on an axis where the first handle and/or the second handle is connected to the rod arm.

In an embodiment of the invention, the door lock mechanism comprises a first position of the first handle or second handle, in which the first handle or second handle is lifted upwards by the user around the first connecting element and the door moves from the locked position (K) to the free position (S); a second position (II) in which the first handle or second handle is rotated clockwise or counterclockwise around the second connecting element relative to the movement direction of the door to facilitate the user to open the door by sliding.

In an embodiment of the invention, the door lock mechanism comprises at least one torsion spring on the second connecting element, which applies a force to the first handle or second handle in the second position to rotate it to the first position.

In an embodiment of the invention, the door lock mechanism comprises at least one connecting rod which is connected to the rod arm at one end and to the first rod or second rod at the other end, and which transmits movement of the rod arm.

In an embodiment of the invention, the door lock mechanism comprises at least one opening on the plate, in which the first rod and the second rod are placed in a movable manner relative to the plate.

In an embodiment of the invention, the door lock mechanism comprises the first handle or second handle and rod arm that correspond to the door surface so that there is no protrusion from the door surface in the locked position.

In an embodiment of the invention, the door lock mechanism comprises a third connecting element and a fourth connecting element that enable the connecting rod to be rotatably connected relative to the rod arm and the first rod.

In an embodiment of the invention, the door lock mechanism comprises at least one pin moved by the shaft, thereby enabling the door to be moved from the free position to the locked position or from the locked position to the free position.

In an embodiment of the invention, the door lock mechanism comprises the pin made on the shaft, integrally with the shaft.

In an embodiment of the invention, the door lock mechanism comprises at least one spring which surrounds the pin and applies a force to the pin to insert the pin into the slot while the door is moved from the free position to the locked position, thereby enabling the door to move to the locked position.

In an embodiment of the invention, the door lock mechanism comprises at least one rail mechanism on the door, which allows the door to be moved on the body by sliding.

In an embodiment of the invention, the door lock mechanism comprises the door with the first handle on one surface and the second handle on the other surface, facing the first handle.

The door lock mechanism realized to achieve the object of the present invention is illustrated in the attached drawings, in which:
Figure 1 is a front view of the door and the first handle.
Figure 2 is a perspective view of the body and rail mechanism.
Figure 3 is a rear view of the door and the second handle.
Figure 4 is a perspective view of the first rod, second rod and rod arm.
Figure 5 is a perspective view of the first connecting element, torsion spring, connecting rod and third connecting element.
Figure 6 is a perspective view of the first handle and second handle.
Figure 7 is a perspective view of the protrusions, plate, first rod and second rod.
Figure 8 is a perspective view of the door in the free position (S).
Figure 9 is a perspective view of the door in the locked position (K).
Figure 10 is a perspective view of the first handle in the first position (I).
Figure 11 is a perspective view of the first handle in the second position (II).

All the parts illustrated in figures are individually assigned a reference numeral and the corresponding terms of these numbers are listed below:
1. Door lock mechanism
2. Door
3. First handle
4. Slot
5. Shaft
6. First rod
7. Second handle
8. Second rod
9. Protrusion
10. Plate
11. Rod arm
12. First connecting element
13. Second connecting element
14. Torsion spring
15. Connecting rod
16. Opening
17. Third connecting element
18. Fourth connecting element
19. Pin
20. Spring
21. Rail mechanism
(G) Body
(K) Locked position
(S) Free position
(I) First position
(II) Second position

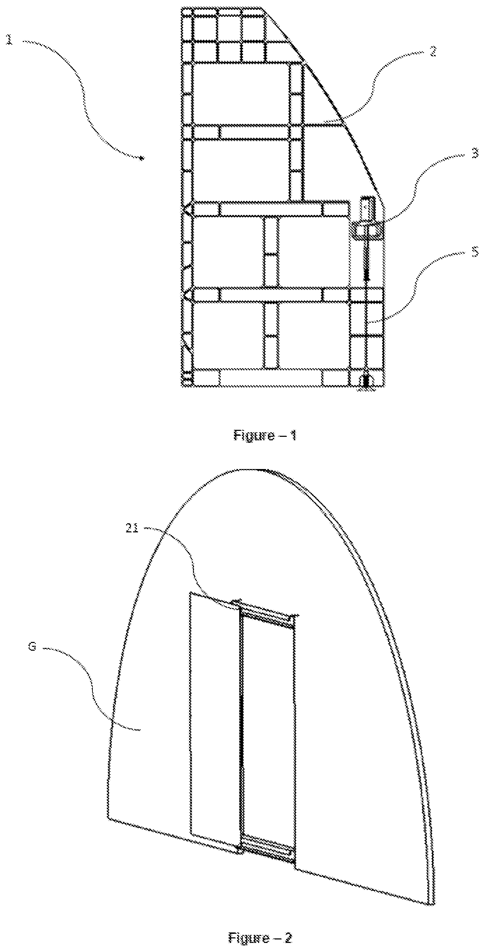

The door lock mechanism (1) comprises a body (G) on an air vehicle; at least one door (2) on the body (G); a locked position (K) in which the door (2) is stationary on the body (G); a free position (S) in which the door (2) is located movably on the body (G); a first handle (3) on the door (2), which allows the door (2) to move from the locked position (K) to the free position (S) or from the free position (S) to the locked position (K); at least one slot (4) on the body (G); a shaft (5) triggered by the first handle (3) and moving in a direction in which the shaft (5) extends on the door (2), wherein the shaft (5) is inserted removably into the slot (4), thus enabling the door (2) to move from the free position (S) to the locked position (K) or from the locked position (K) to the free position (S) (Figure 1, Figure 2, Figure 3, Figure 8, Figure 9).

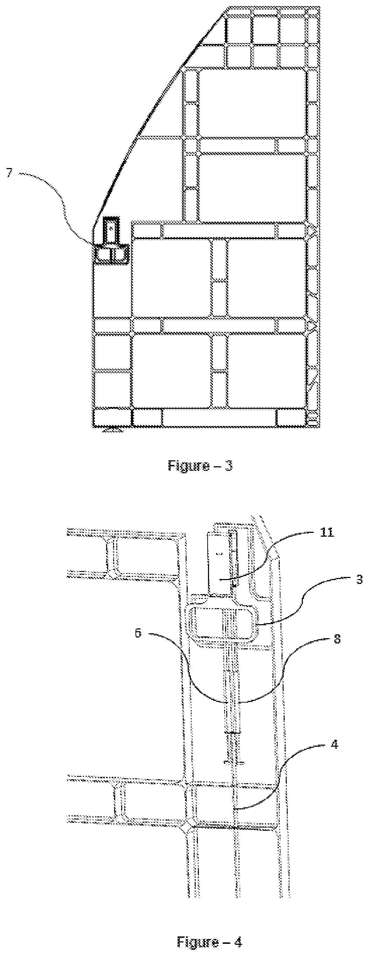

The door lock mechanism (1) according to the invention comprises a first rod (6) which transmits a movement of the first handle (3) to the shaft (5); a second handle (7) on the door (2); a second rod (8) which transmits a movement of the second handle (7) to the shaft (5); at least one protrusion (9) which extends outward from each of the first rod (6) and the second rod (8); at least one plate (10) which is located on the shaft (5), with a distance to the protrusions (9) when the door (2) is in the locked position (K), thereby allowing the first handle (3) and second handle (7) to move independently of each other due to said distance, wherein the plate (10) contacts the protrusions (9) when the first rod (6) or the second rod (8) is triggered, thus enabling the shaft (5) to move so that the door (2) is moved from the locked position (K) to the free position (S) (Figure 4).

The first handle (3) located on the door (2) is triggered by the user, allowing it to move on the door (2). Movement of the handle triggers the shaft (5). When the shaft (5) is triggered, the door is moved to the locked position (K) or to the free position (S) on the body (G).

A second handle (7) is also located on the door (2). The first rod (6) and second rod (8), one end of which can contact the plate (10) and the other end of which can contact the first handle (3) or the second handle (7), are provided to transmit movement of the first handle (3) and the second handle (7) to the shaft (5). Thanks to the distance between the protrusions (9) on the first rod (6) and the second rod (8) and the plate (10) on the shaft (5), the first handle (3) and the second handle (7) can be operated independently of each other. movement is provided. In addition, the door lock mechanism (1) is simplified and made light-weight without using different shafts (5) for the first handle (3) and the second handle (7) and for the first rod (6) and the second rod (8).

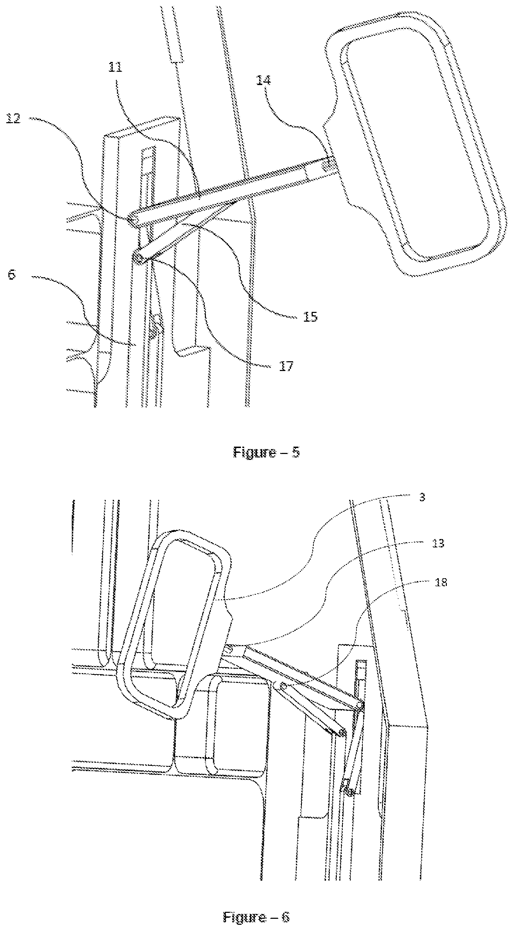

In an embodiment of the invention, the door lock mechanism (1) comprises at least one rod arm (11) located in connection with each of the first handle (3) and the second handle (7), connected rotatably to the door (2), and allowing a movement applied by the first handle (3) or the second handle (7) to be transmitted to the first rod (6) or second rod (8); a first connecting element (12) located between the rod arm (11) and the door (2) and allowing the rod arm (11) to rotate around itself on an axis in which the rod arm (11) is connected to the door (2); at least a second connecting element (13) located between the rod arm (11) and the first handle (3) or second handle (7), and allowing the first handle (3) and/or the second handle (7) to rotate around itself on an axis in which the first handle (3) and/or the second handle (7) is connected to the rod arm (11). Thanks to the first connecting element (12) and the second connecting element (13), the rod arm (11) and the first handle (3) or the second handle (7) can be rotated on the door (2) independently of each other (Figure 5, Figure 6).

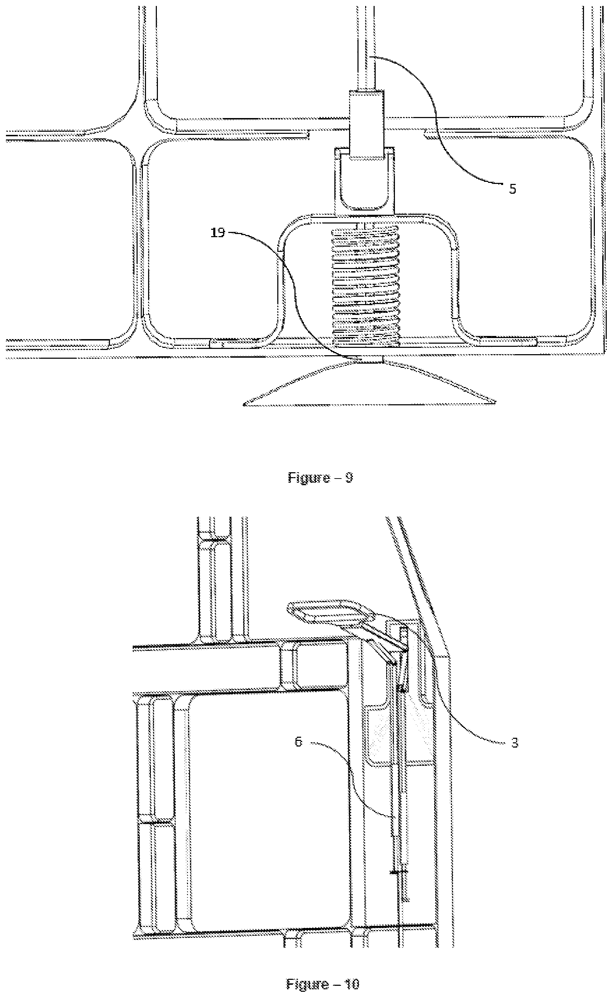

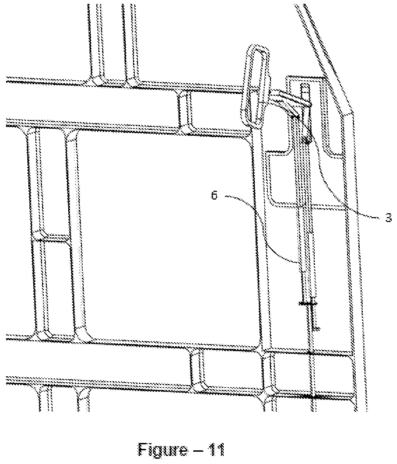

In an embodiment of the invention, the door lock mechanism (1) comprises a first position (I) of the first handle (3) or second handle (7), in which the first handle (3) or the second handle (7) is triggered by the user to rotate around the first connecting element (12), so that the door (2) is moved from the locked position (K) to the free position (S); a second position (II) in which the surfaces of the first handle (3) or the second handle (7) are rotated almost perpendicularly to a movement direction of the door (2) around the second connecting element (13). Thanks to the first connecting element (12) located on the rod arm (11), the first handle (3) first moves the door (2) to the free position (S), and then the first handle is rotated around the second connecting element (13), so that the first handle (3) or the second handle (7) is moved to the second position (II) in order for the user to open the door (2) in an easier manner (Figure 10, Figure 11).

In an embodiment of the invention, the door lock mechanism (1) comprises at least one torsion spring (14) on the second connecting element (13), which applies a force to the first handle (3) or second handle (7) that are previously moved by the user to the second position (II), so that the first handle (3) or second handle (7) are moved to the first position (I). Thanks to the torsion spring (14), when a user releases the first handle (3) or second handle (7), the first handle (3) or second handle (7) rotates around the second connecting element (13) relative to the rod arm (11), so as to be moved to the first position (I).

In an embodiment of the invention, the door lock mechanism (1) comprises at least one connecting rod (15) located on the rod arm (11), between the rod arm (11) and the first connecting element (12), and transmitting a movement of the rod arm (11) to the first rod (6). Since the connecting rod (15) is connected to the rod arm (11) at a point between the rod arm (11) and the first connecting element (12), movement of the rod arm (11) is transmitted such that the first rod (6) or second rod (8) moves on the door.

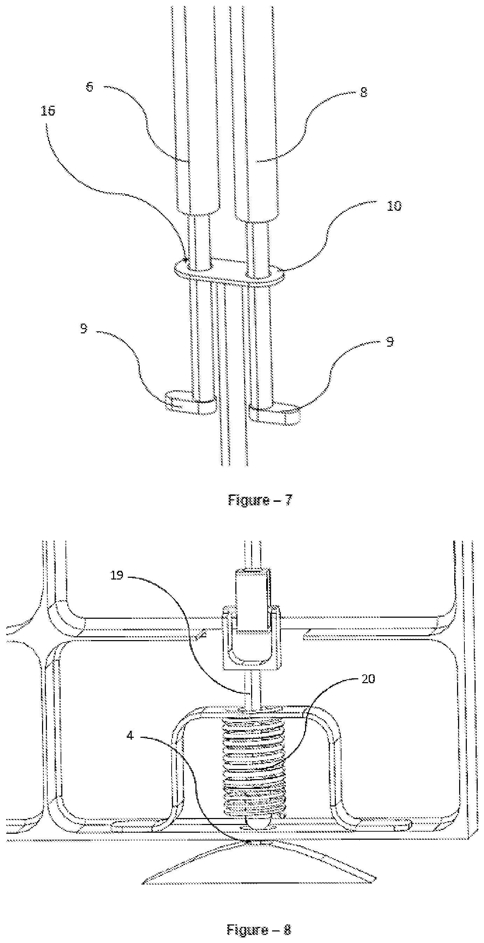

In an embodiment of the invention, the door lock mechanism (1) comprises at least one opening (16) on the plate (10), which allows the first rod (6) and the second rod (8) to move relative to the shaft (5) so as to contact the plate (10), wherein the first rod (6) and the second rod (8) are located movably in the opening (16). Thanks to the opening (16) located on the plate (10), the first rod (6) and the second rod (8) can move inside the plate (10) and contact the plate (10) via the protrusions (9), thereby triggering the shaft (5) (Figure 7).

In an embodiment of the invention, the door lock mechanism (1) comprises the first handle (3) and the rod arm (11) that correspond to the surface of the door (2) when the door (2) is in the locked position (K). Since the first handle (3) or the second handle (7) is positioned in the body (G) without extending outward from the door, the door (2) does not occupy any extra volume on the air vehicle.

In an embodiment of the invention, the door lock mechanism (1) comprises a third connecting element (17) and a fourth connecting element (18) which enable the connecting rod (15) to be movably connected to the rod arm (11) relative to the first rod (6) or the second rod (8). Therefore, the connecting rod (15) enables the first rod (6) or the second rod (8) to move in a direction desired by the user.

In an embodiment of the invention, the door lock mechanism (1) comprises at least one pin (19) triggered by the shaft (5) so as to be removably inserted into the slot (4), thereby enabling the door (2) to move from the free position (S) to the locked position (K) or from the locked position (K) to the free position (S). Thanks to the pin (19), the door (2) can be securely located in the locked position (K) or in the free position (S).

In an embodiment of the invention, the door lock mechanism (1) comprises the pin (19) located integrally with the shaft (5).

In an embodiment of the invention, the door lock mechanism (1) comprises at least one spring (20) on the pin (19), which applies a pressing force towards the slot (4) when the door (2) is moved from the free position (S) to the locked position (K), thus allowing the pin (19) to be inserted into the slot (4). Thanks to the spring (20), the pin (19) can be automatically moved from the free position (S) to the locked position (K) without requiring any force applied by the user.

In an embodiment of the invention, the door lock mechanism (1) comprises at least one rail mechanism (21) located on the door (2) and allowing the door (2) to be opened and/or closed by the user by sliding.

In an embodiment of the invention, the door lock mechanism (1) comprises the door (2) with the first handle (3) on one surface thereof and the second handle (7) on the other surface thereof, mirror-symmetrically to the first handle (3).

## Claims

1. A lock mechanism (1) comprising a body (G) for an air vehicle; at least one door (2) on the body (G); a locked position (K) in which the door (2) is stationary on the body (G); a free position (S) in which the door (2) is located movably on the body (G); a first handle (3) on the door (2), which allows the door (2) to move from the locked position (K) to the free position (S) or from the free position (S) to the locked position (K); at least one slot (4) on the body (G); a shaft (5) triggered by the first handle (3) and moving in a direction in which the shaft (5) extends on the door (2), wherein the shaft (5) is inserted removably into the slot (4), thus enabling the door (2) to move from the free position (S) to the locked position (K) or from the locked position (K) to the free position (S), and a second handle (7) on the door (2), **characterized by** a first rod (6) which transmits a movement of the first handle (3) to the shaft (5); a second rod (8) which transmits a movement of the second handle (7) to the shaft (5); at least one protrusion (9) which extends outward from each of the first rod (6) and the second rod (8); at least one plate (10) which is located on the shaft (5), with a distance to the protrusions (9) when the door (2) is in the locked position (K), thereby allowing the first handle (3) and second handle (7) to move independently of each other due to said distance, wherein the plate (10) contacts the protrusions (9) when the first rod (6) or the second rod (8) is triggered, thus enabling the shaft (5) to move so that the door (2) is moved from the locked position (K) to the free position (S).

2. A lock mechanism (1) according to claim 1, **characterized by** at least one rod arm (11) located in connection with each of the first handle (3) and the second handle (7), connected rotatably to the door (2), and allowing a movement applied by the first handle (3) or the second handle (7) to be transmitted to the first rod (6) or second rod (8); a first connecting element (12) located between the rod arm (11) and the door (2) and allowing the rod arm (11) to rotate around itself on an axis in which the rod arm (11) is connected to the door (2); at least a second connecting element (13) located between the rod arm (11) and the first handle (3) or second handle (7), and allowing the first handle (3) and/or the second handle (7) to rotate around itself on an axis in which the first handle (3) and/or the second handle (7) is connected to the rod arm (11).

3. A door lock mechanism (1) according to claim 2, **characterized by** a first position (I) of the first handle (3) or second handle (7), in which the first handle (3) or the second handle (7) is triggered by the user to rotate around the first connecting element (12), so that the door (2) is moved from the locked position (K) to the free position (S); a second position (II) in which the surfaces of the first handle (3) or the second handle (7) are rotated almost perpendicularly to a movement direction of the door (2) around the second connecting element (13).

4. A door lock mechanism (1) according to claim 3, **characterized by** at least one torsion spring (14) on the second connecting element (13), which applies a force to the first handle (3) or second handle (7) that are previously moved by the user to the second position (II), so that the first handle (3) or second handle (7) are moved to the first position (I).

5. A door lock mechanism (1) according to any of the claims 2 to 4, **characterized by** at least one connecting rod (15) located on the rod arm (11), between the rod arm (11) and the first connecting element (12), and transmitting a movement of the rod arm (11) to the first rod (6).

6. A door lock mechanism (1) according to any of the above claims, **characterized by** at least one opening (16) on the plate (10), which allows the first rod (6) and the second rod (8) to move relative to the shaft (5) so as to contact the plate (10), wherein the first rod (6) and the second rod (8) are located movably in the opening (16).

7. A lock mechanism (1) according to any of the claims 2 to 6, **characterized by** the first handle (3) and the rod arm (11) that correspond to the surface of the door (2) when the door (2) is in the locked position (K).

8. A door lock mechanism (1) according to any of the claims 5 to 7, **characterized by** a third connecting element (17) and a fourth connecting element (18) which enable the connecting rod (15) to be movably connected to the rod arm (11) relative to the first rod (6) or the second rod (8).

9. A door lock mechanism (1) according to any of the above claims, **characterized by** at least one pin (19) triggered by the shaft (5) so as to be removably inserted into the slot (4), thereby enabling the door (2) to move from the free position (S) to the locked position (K) or from the locked position (K) to the free position (S).

10. A door lock mechanism (1) according to claim 9, **characterized by** the pin (19) located integrally with the shaft (5).

11. A door lock mechanism (1) according to claim 9 or claim 10, **characterized by** at least one spring (20) on the pin (19), which applies a pressing force towards the slot (4) when the door (2) is moved from the free position (S) to the locked position (K), thus allowing the pin (19) to be inserted into the slot (4).

12. A door lock mechanism (1) according to any of the above claims, **characterized by** at least one rail mechanism (21) located on the door (2) and allowing the door (2) to be opened and/or closed by the user by sliding.

13. A door lock mechanism (1) according to any of the above claims, **characterized by** the door (2) with the first handle (3) on one surface thereof and the second handle (7) on the other surface thereof, mirror-symmetrically to the first handle (3).

## Patentansprüche

1. Verriegelungsmechanismus (1), umfassend einen Rumpf (G) für ein Luftfahrzeug; mindestens eine am Rumpf (G) angeordnete Tür (2); eine Verriegelungsstellung (K), in der die Tür (2) ortsfest am Rumpf (G) angeordnet ist; eine Freigabestellung (S), in der die Tür (2) beweglich am Rumpf (G) angeordnet ist; einen ersten Griff (3) , der an der Tür (2) angeordnet ist und es ermöglicht, die Tür (2) aus der Verriegelungsstellung (K) in die Freigabestellung (S) oder aus der Freigabestellung (S) in die Verriegelungsstellung (K) zu bewegen; mindestens einen am Rumpf (G) angeordneten Schlitz (4); eine durch den ersten Griff (3) betätigte Welle (5), die sich in ihrer Längsrichtung an der Tür (2) bewegt, wobei die Welle (5) lösbar in den Schlitz (4) einführbar ist, wodurch die Tür (2) aus der Freigabestellung (S) in die Verriegelungsstellung (K) oder aus der Verriegelungsstellung (K) in die Freigabestellung (S) bewegt werden kann; sowie einen zweiten Griff (7) an der Tür (2), **dadurch gekennzeichnet, dass** der Verriegelungsmechanismus (1) ferner umfasst: eine erste Stange (6), die eine Bewegung des ersten Griffs (3) auf die Welle (5) überträgt; eine zweite Stange (8), die eine Bewegung des zweiten Griffs (7) auf die Welle (5) überträgt; mindestens einen Vorsprung (9), der sich jeweils von der ersten Stange (6) und der zweiten Stange (8) nach außen erstreckt; und mindestens eine auf der Welle (5) angeordnete Platte (10), die sich in einem Abstand zu den Vorsprüngen (9) befindet, wenn sich die Tür (2) in der Verriegelungsstellung (K) befindet, wodurch sich der erste Griff (3) und der zweite Griff (7) aufgrund dieses Abstands unabhängig voneinander bewegen können, wobei die Platte (10) mit den Vorsprüngen (9) in Kontakt kommt, wenn die erste Stange (6) oder die zweite Stange (8) betätigt wird, wodurch die Welle (5) bewegt wird, sodass die Tür (2) aus der Verriegelungsstellung (K) in die Freigabestellung (S) bewegt wird.

2. Verriegelungsmechanismus (1) nach Anspruch 1, **dadurch gekennzeichnet, dass** der Verriegelungsmechanismus (1) ferner umfasst: mindestens einen Stangenarm (11), der jeweils dem ersten Griff (3) und dem zweiten Griff (7) zugeordnet, drehbar mit der Tür (2) verbunden und dazu eingerichtet ist, eine vom ersten Griff (3) oder vom zweiten Griff (7) ausgeübte Bewegung auf die erste Stange (6) oder die zweite Stange (8) zu übertragen; ein erstes Verbindungselement (12), das zwischen dem Stangenarm (11) und der Tür (2) angeordnet ist und eine Drehung des Stangenarms (11) um die Achse ermöglicht, um die der Stangenarm (11) mit der Tür (2) verbunden ist; und mindestens ein zweites Verbindungselement (13), das zwischen dem Stangenarm (11) und dem ersten Griff (3) oder dem zweiten Griff (7) angeordnet ist und eine Drehung des ersten Griffs (3) und/oder des zweiten Griffs (7) um die jeweilige Achse ermöglicht, um die der erste Griff (3) und/oder der zweite Griff (7) mit dem Stangenarm (11) verbunden ist.

3. Ein Türverriegelungsmechanismus (1) nach Anspruch 2, **dadurch gekennzeichnet, dass** der erste Griff (3) oder der zweite Griff (7) eine erste Position (I) einnimmt, in der der jeweilige Griff vom Benutzer betätigt wird, um sich um das erste Verbindungselement (12) zu drehen, sodass die Tür (2) aus der Verriegelungsstellung (K) in die Freigabestellung (S) bewegt wird, sowie eine zweite Position (II), in der die Oberflächen des ersten Griffs (3) oder des zweiten Griffs (7) um das zweite Verbindungselement (13) herum nahezu senkrecht zu einer Bewegungsrichtung der Tür (2) ausgerichtet sind.

4. Ein Türverriegelungsmechanismus (1) nach Anspruch 3, **dadurch gekennzeichnet, dass** mindestens eine Torsionsfeder (14) am zweiten Verbindungselement (13) angebracht ist, die auf den ersten Griff (3) oder den zweiten Griff (7), der zuvor vom Benutzer in die zweite Position (II) bewegt wurde, eine Kraft ausübt, sodass der betreffende Griff in die erste Position (I) zurückbewegt wird.

5. Ein Türverriegelungsmechanismus (1) nach einem der Ansprüche 2 bis 4, **dadurch gekennzeichnet, dass** mindestens eine Verbindungsstange (15) am Stangenarm (11) zwischen diesem und dem ersten Verbindungselement (12) angeordnet ist und eine Bewegung des Stangenarms (11) auf die erste Stange (6) überträgt.

6. Ein Türverriegelungsmechanismus (1) nach einem der vorstehenden Ansprüche, **dadurch gekennzeichnet, dass** mindestens eine Öffnung (16) in der Platte (10) vorgesehen ist, die eine Bewegung der ersten Stange (6) und der zweiten Stange (8) relativ zur Welle (5) derart ermöglicht, dass die erste Stange (6) und die zweite Stange (8) mit der Platte (10) in Kontakt kommen, wobei die erste Stange (6) und die zweite Stange (8) beweglich in der Öffnung (16) angeordnet sind.

7. Verriegelungsmechanismus (1) nach einem der Ansprüche 2 bis 6, **dadurch gekennzeichnet, dass** der erste Griff (3) und der Stangenarm (11) im Verriegelungszustand der Tür (2) bündig mit der Oberfläche der Tür (2) abschließen.

8. Ein Türverriegelungsmechanismus (1) nach einem der Ansprüche 5 bis 7, **dadurch gekennzeichnet, dass** ein drittes Verbindungselement (17) und ein viertes Verbindungselement (18) vorgesehen sind, die es ermöglichen, die Verbindungsstange (15) beweglich mit dem Stangenarm (11) zu verbinden, sodass eine Relativbewegung gegenüber der ersten Stange (6) oder der zweiten Stange (8) möglich ist.

9. Ein Türverriegelungsmechanismus (1) nach einem der vorstehenden Ansprüche, **dadurch gekennzeichnet, dass** mindestens ein Stift (19) vorgesehen ist, der durch die Welle (5) betätigt wird und lösbar in den Schlitz (4) einführbar ist, wodurch die Tür (2) aus der Freigabestellung (S) in die Verriegelungsstellung (K) oder aus der Verriegelungsstellung (K) in die Freigabestellung (S) bewegt werden kann.

10. Ein Türverriegelungsmechanismus (1) nach Anspruch 9, **dadurch gekennzeichnet, dass** der Stift (19) einstückig mit der Welle (5) ausgebildet ist.

11. Ein Türverriegelungsmechanismus (1) nach Anspruch 9 oder Anspruch 10, **dadurch gekennzeichnet, dass** mindestens eine Feder (20) am Stift (19) angeordnet ist und eine Druckkraft in Richtung des Schlitzes (4) ausübt, wenn die Tür (2) aus der Freigabestellung (S) in die Verriegelungsstellung (K) bewegt wird, wodurch der Stift (19) in den Schlitz (4) eingeführt werden kann.

12. Ein Türverriegelungsmechanismus (1) nach einem der vorstehenden Ansprüche, **dadurch gekennzeichnet, dass** mindestens ein an der Tür (2) angeordneter Schienenmechanismus (21) vorgesehen ist, der es dem Benutzer ermöglicht, die Tür (2) durch Schieben zu öffnen und/oder zu schließen.

13. Ein Türverriegelungsmechanismus (1) nach einem der vorstehenden Ansprüche, **dadurch gekennzeichnet, dass** die Tür (2) den ersten Griff (3) an einer ihrer Oberflächen und den zweiten Griff (7) an ihrer gegenüberliegenden Oberfläche aufweist, wobei der zweite Griff (7) spiegelsymmetrisch zum ersten Griff (3) angeordnet ist.

## Revendications

1. Mécanisme de verrouillage (1) comprenant un corps (G) destiné à un aéronef ; au moins une porte (2) disposée sur le corps (G) ; une position verrouillée (K) dans laquelle la porte (2) est immobile sur le corps (G) ; une position libre (S) dans laquelle la porte (2) est mobile sur le corps (G) ; une première poignée (3) disposée sur la porte (2), permettant à la porte (2) de passer de la position verrouillée (K) à la position libre (S) ou de la position libre (S) à la position verrouillée (K) ; au moins une fente (4) située sur le corps (G) ; une tige (5) actionnée par la première poignée (3) et se déplaçant dans une direction correspondant à celle selon laquelle la tige (5) s'étend sur la porte (2), la tige (5) étant insérée de manière amovible dans la fente (4), permettant ainsi à la porte (2) de passer de la position libre (S) à la position verrouillée (K) ou de la position verrouillée (K) à la position libre (S) ; une seconde poignée (7) disposée sur la porte (2), **caractérisé en ce qu'**il comprend une première tringle (6) qui transmet un mouvement de la première poignée (3) à la tige (5) ; une seconde tringle (8) qui transmet un mouvement de la seconde poignée (7) à la tige (5) ; au moins une saillie (9) s'étendant vers l'extérieur à partir de chacune des première et seconde tringles (6, 8) ; au moins une plaque (10) située sur la tige (5), à une certaine distance des saillies (9) lorsque la porte (2) se trouve dans la position verrouillée (K), permettant ainsi à la première poignée (3) et à la seconde poignée (7) de se déplacer indépendamment l'une de l'autre en raison de cet espacement, la plaque (10) venant en contact avec les saillies (9) lorsque la première tringle (6) ou la seconde tringle (8) est actionnée, permettant ainsi le déplacement de la tige (5), de sorte que la porte (2) passe de la position verrouillée (K) à la position libre (S).

2. Mécanisme de verrouillage (1) selon la revendication 1, **caractérisé en ce qu'**au moins un bras de tringle (11) est associé à chacune de la première poignée (3) et de la seconde poignée (7), est relié de manière rotative à la porte (2) et permet de transmettre un mouvement exercé par la première poignée (3) ou la seconde poignée (7) à la première tringle (6) ou à la seconde tringle (8) ; un premier élément de liaison (12) est disposé entre le bras de tringle (11) et la porte (2) et permet au bras de tringle (11) de pivoter autour d'un axe au niveau duquel le bras de tringle (11) est relié à la porte (2) ; au moins un second élément de liaison (13) est disposé entre le bras de tringle (11) et la première poignée (3) ou la seconde poignée (7) et permet à la première poignée (3) et/ou à la seconde poignée (7) de pivoter autour d'un axe au niveau duquel la poignée concernée est reliée au bras de tringle (11).

3. Mécanisme de verrouillage de porte (1) selon la revendication 2, **caractérisé en ce qu'**une première position (I) de la première poignée (3) ou de la seconde poignée (7) est prévue, dans laquelle la première poignée (3) ou la seconde poignée (7) est actionnée par l'utilisateur de manière à tourner autour du premier élément de liaison (12), de sorte que la porte (2) passe de la position verrouillée (K) à la position libre (S) ; une seconde position (II) est prévue, dans laquelle les surfaces de la première poignée (3) ou de la seconde poignée (7) sont orientées de manière à être sensiblement perpendiculaires à la direction de déplacement de la porte (2), la rotation s'effectuant autour du second élément de liaison (13).

4. Mécanisme de verrouillage de porte (1) selon la revendication 3, **caractérisé en ce qu'**au moins un ressort de torsion (14) est disposé sur le second élément de liaison (13) et exerce une force sur la première poignée (3) ou la seconde poignée (7), préalablement déplacée par l'utilisateur vers la seconde position (II), de sorte que la première poignée (3) ou la seconde poignée (7) soit ramenée à la première position (I).

5. Mécanisme de verrouillage de porte (1) selon l'une quelconque des revendications 2 à 4, **caractérisé en ce qu'**au moins une bielle de liaison (15) est disposée sur le bras de tringle (11), entre celui-ci et le premier élément de liaison (12), et transmet un mouvement du bras de tringle (11) à la première tringle (6).

6. Mécanisme de verrouillage de porte (1) selon l'une quelconque des revendications précédentes, **caractérisé en ce qu'**au moins une ouverture (16) est ménagée dans la plaque (10), permettant à la première tringle (6) et à la seconde tringle (8) de se déplacer par rapport à la tige (5) de manière à venir en contact avec la plaque (10), la première tringle (6) et la seconde tringle (8) étant montées de manière mobile dans l'ouverture (16).

7. Mécanisme de verrouillage (1) selon l'une quelconque des revendications 2 à 6, **caractérisé en ce que** la première poignée (3) et le bras de tringle (11) affleurent à la surface de la porte (2) lorsque la porte (2) se trouve dans la position verrouillée (K).

8. Mécanisme de verrouillage de porte (1) selon l'une quelconque des revendications 5 à 7, **caractérisé en ce qu'**un troisième élément de liaison (17) et un quatrième élément de liaison (18) permettent de relier de manière mobile la bielle de liaison (15) au bras de tringle (11), par rapport à la première tringle (6) ou à la seconde tringle (8).

9. Mécanisme de verrouillage de porte (1) selon l'une quelconque des revendications précédentes, **caractérisé en ce qu'**au moins une goupille (19) est actionnée par la tige (5) de manière à pouvoir être insérée de manière amovible dans la fente (4), permettant ainsi à la porte (2) de passer de la position libre (S) à la position verrouillée (K), ou inversement.

10. Mécanisme de verrouillage de porte (1) selon la revendication 9, **caractérisé en ce que** la goupille (19) est réalisée d'une seule pièce avec la tige (5).

11. Mécanisme de verrouillage de porte (1) selon la revendication 9 ou 10, **caractérisé en ce qu'**au moins un ressort (20) est disposé sur la goupille (19) et exerce une force en direction de la fente (4) lorsque la porte (2) passe de la position libre (S) à la position verrouillée (K), favorisant ainsi l'insertion de la goupille (19) dans la fente (4).

12. Mécanisme de verrouillage de porte (1) selon l'une quelconque des revendications précédentes, **caractérisé en ce qu'**au moins un mécanisme de guidage par rail (21) est disposé sur la porte (2) et permet à l'utilisateur d'ouvrir et/ou de fermer la porte (2) par coulissement.

13. Mécanisme de verrouillage de porte (1) selon l'une quelconque des revendications précédentes, **caractérisé en ce que** la porte (2) comporte la première poignée (3) sur l'une de ses faces et la seconde poignée (7) sur la face opposée, lesdites poignées étant disposées symétriquement en miroir l'une par rapport à l'autre.
